(19) Europäisches Patentamt
European Patent Office
Office européen des brevets

(11) **EP 2 940 620 B1**

(12) **EUROPÄISCHE PATENTSCHRIFT**

(45) Veröffentlichungstag und Bekanntmachung des Hinweises auf die Patenterteilung:
**26.04.2017 Patentblatt 2017/17**

(51) Int Cl.:
*G06F 21/44* (2013.01)    *H04L 29/06* (2006.01)
*H04L 9/32* (2006.01)

(21) Anmeldenummer: **15157209.6**

(22) Anmeldetag: **02.03.2015**

(54) **ABLEITEN EINES GERÄTESPEZIFISCHEN WERTES MIT HILFE EINER UNKLONBAREN FUNKTION**

DERIVATION OF A DEVICE-SPECIFIC VALUE EMPLOYING AN UNCLONABLE FUNCTION

DÉVIATION D'UNE VALEUR PROPRE À UN APPAREIL AIDÉ PAR UNE FONCTION INCLONABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2014 DE 102014208210**

(43) Veröffentlichungstag der Anmeldung:
**04.11.2015 Patentblatt 2015/45**

(73) Patentinhaber: **Siemens Aktiengesellschaft 80333 München (DE)**

(72) Erfinder:
• **Falk, Rainer 85586 Poing (DE)**
• **Mucha, Andreas 81375 München (DE)**

(56) Entgegenhaltungen:
WO-A1-2012/045627    US-A1- 2010 127 822
US-A1- 2011 055 649    US-A1- 2014 093 074

• **EDWARD SUH G ET AL: "Physical Unclonable Functions for Device Authentication and Secret Key Generation", 2007 44TH ACM/IEEE DESIGN AUTOMATION CONFERENCE : SAN DIEGO, CA, 4 - 8 JUNE 2007, IEEE, PISCATAWAY, NJ, 1. Juni 2007 (2007-06-01), Seiten 9-14, XP031183294, ISBN: 978-1-59593-627-1**

EP 2 940 620 B1

**Beschreibung**

Die Erfindung betrifft ein Verfahren und eine Vorrichtung zum Ableiten eines gerätespezifischen Wertes aus einer auf einer Schaltkreiseinheit realisierten physikalisch unklonbaren Funktion.

Physikalisch unklonbare Funktionen, sogenannte Physical Unclonable Functions, sind bekannt, um Objekte zuverlässig anhand ihrer intrinsischen physikalischen Eigenschaften zu identifizieren. Eine physikalische Eigenschaft eines Gegenstandes, beispielsweise eines Halbleiter-Schaltkreises, wird dabei als individueller Fingerabdruck verwendet. Eine physikalisch unklonbare Funktion wird beispielsweise mit einer Challenge beaufschlagt und liefert eine Response, welche bei einem Nachbau des Gerätes bei Beaufschlagen mit der gleichen Challenge mittels der gleichen physikalisch unklonbaren Funktion nicht generierbar sein soll. Eine Response soll nicht vorhersehbar sein und somit nicht - auch nicht bei Kenntnis der Challenge - auf einem anderen, nachgebautem Schaltkreis erzeugt werden können. Somit kann eine Authentifizierung mittels der physikalisch unklonbaren Funktion erreicht werden, indem beispielsweise eine Response oder ein daraus abgeleiteter Wert wie beispielsweise ein kryptographischer Schlüssel, nur generiert werden kann, falls ein Zugriff auf den unveränderten, nicht manipulierten Schaltkreis mit der darauf implementierten physikalisch unklonbaren Funktion vorhanden ist.

Ebenso kann mittels einer physikalisch unklonbaren Funktion geprüft werden, ob es sich bei einem Gerät oder einem Halbleiter-Schaltkreis um ein Originalprodukt handelt, wobei auch hier beispielsweise eine Response ausgewertet wird, welche nicht auf einem nachgebauten oder manipulierten Gerät oder Halbleiter-Schaltkreis generiert werden kann.

Im Umfeld kryptographischer Security-Mechanismen ist die Verwendung physikalisch unklonbarer Funktionen vorgesehen, um ein Abspeichern eines kryptographischen Schlüssels in einem Speicher oder ein manuelles Eingeben des Schlüssels zu vermeiden. Um aufwendige physikalisch geschützte Hardware-Bausteine oder eine aufwendige Obfuskation eines Schlüssels zu verhindern, werden physikalisch unklonbare Funktionen verwendet. Das Erzeugen eines kryptographischen Schlüssels durch Beaufschlagen einer physikalisch unklonbaren Funktion mit einer Challenge stellt einen sicheren Schlüsselspeicher dar.

Im Umfeld der Erzeugung kryptographischer Schlüssel sowie bei der Verwendung einer physikalisch unklonbaren Funktion zur Identitätsüberprüfung oder Originalitätsprüfung besteht ein Bedarf, einen gerätespezifischen oder hardwarespezifischen Identifizierer reproduzierbar bereitzustellen.

Dazu werden im Stand der Technik, wie zum Beispiel in dem IEEE-Artikel von S G Edward et al "Physical Unclonable Functions for Device Authentication and Secret Key Generation" vom 1. Juni 2007, oder den Druckschriften US2011/055649-A1, US2010/127822-A1, US2014/093074-A1 und WO2012/045627-A1, physikalisch unklonbare Funktionen bzw. Challenges, mit welchen die physikalisch unklonbare Funktion beaufschlagt wird, in einer Initialisierungsphase auf ihre Tauglichkeit zur Verwendung für eine Schlüsselableitung oder Authentizitätsprüfung hin getestet. Es ist dabei insbesondere allgemein bekannt, eine sogenannte SRAM-PUF (Static Random Access Memory-PUF) zu verwenden, wobei ein Initialzustand von Speicherzellen als gerätespezifische Eigenschaft verwendet wird. Dafür muss zunächst überprüft werden, welche Speicherzellen stabil sind. Nur stabile Zellen werden für die folgende Ermittlung eines Schlüssels oder Identifizierers verwendet.

Bei der Verwendung physikalisch unklonbarer Funktionen zur Erzeugung kryptographischer Schlüssel werden sogenannte Fuzzy Key Extractors verwendet, welche unter Zuhilfenahme von Hilfsdatensätzen ein Fehlerkorrekturcodeverfahren realisieren. Die Erzeugung der Hilfsdaten ist aufwendig und das Abspeichern erzeugter Hilfsdatensatze muss in geeigneten Speicherbausteinen erfolgen. Nur so kann eine reproduzierbare und gesicherte Generierung eines kryptographischen Schlüssels sichergestellt werden. Gleichzeitig dürfen die Hilfsdaten keinen Hinweis auf den Schlüssel enthalten, so dass ein Fehlerkorrekturcode aufwendig zu erstellen ist.

Vor diesem Hintergrund ist es Aufgabe der vorliegenden Erfindung, ein vereinfachtes Ableiten eines gerätespezifischen Wertes mittels einer physikalisch unklonbaren Funktion, insbesondere ohne Notwendigkeit eines Fehlerkorrekturcodeverfahrens, zu ermöglichen.

Diese Aufgabe wird durch die angegebenen unabhängigen Ansprüche gelöst. Vorteilhafte Ausgestaltungen und Weiterbildungen sind in den Unteransprüchen angegeben.

Bei einem erfindungsgemäßen Verfahren zum Ableiten eines gerätespezifischen Wertes aus einer auf einer Schaltkreiseinheit realisierten physikalisch unklonbaren Funktion wird die physikalisch unklonbare Funktion mindestens zweimal mit einer identischen Challenge beaufschlagt zum Erzeugen mindestens zweier Responses. Aus einer statistischen Eigenschaft der mindestens zwei Responses wird eine zu der Challenge gehörige Kategorisierungsinformation abgeleitet und aus der Kategorisierungsinformation der gerätespezifische Wert erzeugt.

Die physikalisch unklonbare Funktion, auch Physical Unclonable Function und im Folgenden kurz PUF genannt, wird in dem vorgeschlagenen Verfahren verwendet, ohne zuvor das Verhalten von verschiedenen Responses zu verschiedenen Challenges geprüft zu haben oder ohne vorher unterschiedliche Konfigurationen der PUF geprüft zu haben. Auch eine beliebige PUF, welche zunächst ungeeignet erscheint, eine reproduzierbare Response zu erzeugen oder eine PUF, für welche zur Erzeugung eines reproduzierbaren gerätespezifischen Wertes im Stand der Technik ein Fehlerkorrekturcodeverfahren notwendig wäre, wird gemäß dem vorgeschlagenen Verfahren verwendet.

Somit wird eine physikalisch unklonbare Funktion oder eine spezifische Implementierung einer physikalisch unklonbaren Funktion oder eine festlegbare Challenge, mit welcher die physikalisch unklonbare Funktion beaufschlagt wird, im Hinblick auf die statistischen Eigenschaften bei mehrmaliger hintereinander erfolgender Beaufschlagung charakterisiert. Eine identische Realisierung der physikalisch unklonbaren Funktion oder eine unveränderte Implementierung oder Konfiguration der physikalisch unklonbaren Funktion wird mit einer identischen Challenge mehrfach beaufschlagt. Beispielsweise wird die Funktion zweimal oder achtmal oder mehrere hundertmal mit der identischen Challenge beaufschlagt und es werden dementsprechend zwei, acht oder mehrere hundert Responses ermittelt.

Das Response-Verhalten ist im Allgemeinen nicht stabil, das heißt Response-Werte variieren untereinander in charakteristischer Form. Die statistischen Abweichungen der Responses untereinander sind dabei kennzeichnend für eine Realisierung oder Implementierung oder Konfiguration einer physikalisch unklonbaren Funktion auf einer Schaltkreiseinheit. Die verschiedenen ermittelten Responses werden untereinander verglichen und aus dem Vergleich wird eine Kategorisierungsinformation abgeleitet.

Die Kategorisierungsinformation gibt somit Auskunft über ein Verhältnis der aus der identischen Challenge gewonnenen Responses. Nicht der Wert einer Response als solches, sondern ein daraus ableitbarer statistischer Wert, wie beispielsweise die Häufigkeit eines darin auftretenden Bitmusters, ist für die Erzeugung des gerätespezifischen Wertes ausschlaggebend. Somit stehen eine Vielzahl von PUFs sowie eine Vielzahl von Challenges zur Durchführung des Verfahrens zur Verfügung, welche in bekannten Verfahren aufgrund von nichtdeterministischem Verhalten nur mit aufwendigen Fehlerkorrekturcodeverfahren oder gar nicht eingesetzt werden können.

Gemäß einer Ausgestaltung wird aus einer Folge von Responses als Kategorisierungsinformation eine Bitfehler-Charakteristik ermittelt. Typischerweise treten bei gängigen physikalisch unklonbaren Funktionen Bitfehler auf, wenn eine Challenge mehrfach zur Erzeugung eines Response-Wertes verwendet wird. Die verschiedenen Response-Werte weichen dann voneinander ab. Dabei wird im Allgemeinen von einem Bitfehler gesprochen.

Im Stand der Technik muss durch passende Nachbearbeitungsverfahren oder Fehlerkorrekturcodeverfahren die Eignung der Challenge oder der Konfiguration der physikalisch unklonbaren Funktion sichergestellt werden, beispielsweise um einen identischen Schlüssel auf der Originalhardware zu erzeugen oder um einen Identifizierer zur Authentizitätsprüfung auf einem Originalschaltkreis zu erzeugen.

Das bloße Feststellen von Bitfehlern wird im Stand der Technik dazu genutzt, physikalisch unklonbare Funktionen oder deren Implementierung oder Konfiguration oder einen bestimmten Challenge-Wert als ungeeignet auszusortieren und nicht für das Ableiten eines Identifizierers oder eines Schlüssels zu verwenden.

Auf vorteilhafte Weise wird allerdings gemäß der beschriebenen Ausgestaltung das Ermitteln einer Bitfehler-Charakterisierung beispielsweise zur Schlüsselerzeugung oder Authentizitätsprüfung genutzt. Bei einer Analyse der mindestens zwei Responses ist beispielsweise eine durchschnittliche oder maximale Anzahl unterschiedlicher Bits ermittelbar. So werden die Responses auf ihre Stabilität für eine bestimmte Challenge hin getestet. Ferner kann eine von der Bitfehler-verteilung abhängige statistische Größe, wie beispielsweise ein Median-Wert, eine Varianz, Standardabweichung, eine mittlere absolute Abweichung, eine Spannweite, d.h. eine Differenz zwischen dem größten und dem kleinsten Wert, ein Interquartilsabstand, d.h. eine Differenz zwischen dem dritten Quartil und dem ersten Quartil, ein N-tes zentrales Moment, eine Schiefe oder Asymmetriemaß oder ein Exzess oder Wölbungsmaß ermittelt werden.

Gemäß einer Ausgestaltung wird aus der Kategorisierungsinformation eine Zugehörigkeit zu einer von mindestens zwei, durch mindestens einen Schwellenwert festlegbaren Kategorien abgeleitet und aus der Zugehörigkeit zu der Kategorie der gerätespezifische Wert erzeugt. Beispielsweise wird ein Schwellenwert festgelegt, welcher festlegt, ab wie vielen Bitfehlern oder Abweichungen eine Response in eine Kategorie "instabil" fällt. Entsprechend wird bis zu dem Schwellenwert hin die Kategorie "stabil" festgestellt. Je nach Zugehörigkeit zu einer der beiden Kategorien wird ein Bitwert 0 oder 1 ausgegeben. Dieser bildet den gerätespezifischen Wert. Aus einer Challenge, mit welcher die physikalisch unklonbare Funktion mehrfach beaufschlagt wird, wird ein gerätespezifischer Wert, beispielsweise ein Schlüsselbit, abgeleitet.

Gemäß einer Ausgestaltung wird durch den gerätespezifischen Wert die Zugehörigkeit zu einer von zwei Kategorien als Binärwert angegeben. Somit wird eine besonders einfache Realisierung erreicht, welche mit der Festlegung eines Schwellenwertes auskommt.

Gemäß einer Ausgestaltung wird die Kategorisierungsinformation durch einen Vergleich mindestens einer Response mit einer Referenz-Response ermittelt und aus dem Vergleich der gerätespezifische Wert erzeugt. Beispielsweise wird die Referenz-Response durch die Charakteristik einer ersten ermittelten Response gebildet. Die erste Response wird dabei beispielsweise beim ersten Beaufschlagen mit der zugehörigen ersten Challenge ermittelt. Ferner ist es ebenso möglich, eine Referenz-Response als Referenz-Bitfehler-Verteilung zu ermitteln, welche ihrerseits aus einer Mittelung mehrerer Responses, welche aus der ersten Challenge gebildet wurden, erzeugt wird. Somit wird bereits beim Erstellen der Referenz-Response die statistische Eigenschaft einer physikalisch unklonbaren Funktion oder deren Implementierung oder Konfiguration berücksichtigt.

Der Vergleich von einer oder mehreren Responses mit der Referenz-Response wird insbesondere ermittelt, indem eine bitweise Differenz ermittelt und beispielsweise je nach Anzahl der Responses anschließend gemittelt wird.

Gemäß einer Ausgestaltung wird der gerätespezifische Wert als Integritätskenner eines Gerätes verwendet. Die Authentizität eines Gerätes wird somit überprüft, indem ein gerätespezifischer Wert oder eine Folge aus mehreren gerätespezifischen Werten mit einem originalen, in einer Initialisierungsphase erzeugten gerätespezifischen Wert oder einer in einer Inititalisierungsphase erzeugten Folge aus gerätespezifischen Werten verglichen wird. Ein Kopieren eines Schaltkreises, auf welchem die physikalisch unklonbare Funktion realisiert ist, führt zu einer Abweichung des statistischen Verhaltens von Response-Werten, welche sich in der Abweichung des gerätespezifischen Wertes bemerkbar machen. Insbesondere beim Erzeugen einer Folge gerätespezifischer Werte kann so das Vorliegen eines nicht originalen Schaltkreises erkannt werden, wenn die Abweichung eines aus den gerätespezifischen Werten erfolgten Identifizierers an zu vielen Stellen abweicht von einem Referenzidentifizierer. Eine als Kategorisierungsinformation ermittelte Bitfehlercharakteristik wird beispielsweise mit einer Referenz-Bitfehler-Charakteristik verglichen und daraus die Identität oder Originalität des Schaltkreises erkannt.

Gemäß einer Ausgestaltung wird aus dem gerätespezifischen Wert ein Schlüsselbit eines kryptographischen Schlüssels gebildet.

Ein passender kryptographischer Schlüssel, beispielsweise zur Entschlüsselung oder zur Bildung einer Signatur durch die Schaltkreiseinheit, kann nur erzeugt werden, falls ein originaler, nicht manipulierter Schaltkreis mit einer unveränderten physikalisch unklonbaren Funktion vorliegt. Es ist gleichzeitig nicht nötig, dass stabile Responses auf dem Schaltkreis mit der physikalisch unklonbaren Funktion erzeugbar sind, da die statistische Eigenschaft ebenso als physikalisch kennzeichnendes Merkmal verwendet werden kann. Dies ermöglicht vorteilhaft die Verwendung beliebiger physikalisch unklonbarer Funktionen.

Gemäß einer Ausgestaltung wird eine Folge gerätespezifischer Werte abgeleitet, wobei das Verfahren gemäß einer der oben beschriebenen Ausgestaltungen mit jeweiligen weiteren Challenges zur Erzeugung jeweiliger weiterer gerätespezifischer Werte ausgeführt wird und aus den jeweiligen gerätespezifischen Werten die Folge erzeugt wird. Je nach gewünschter Länge der Folge wird eine Vielzahl an Challenges benötigt. Bei der jeweils durchzuführenden Berechnung sind lediglich einfache mathematische Rechenschritte nötig, welche keine aufwendige Implementierung verursachen. Insbesondere kann eine Implementierung in Hardware wie auch in Software ressourcensparend erfolgen. Die jeweilige Challenge kann sich dabei auch wiederholen. Beispielsweise wird eine Folge mehrfach in beliebiger Reihenfolge verwendet. Weiterhin wird ein Angriff über Seitenkanäle wie Stromverbrauch oder elektromagnetische Abstrahlung erschwert, wenn eine abgeleitete statistische Eigenschaft wie die der Stabilität für die Erzeugung des gerätespezifischen Werts verwendet wird.

Gemäß einer Ausgestaltung wird aus der Folge ein kryptographischer Schlüssel gebildet. Je nach Schlüssellänge ist die Anzahl der benötigten Challenges entsprechend groß. Challengefolge-Generatoren sind zum wiederholten Erzeugen von mehreren Folgen von Challenge-Werten geeignet. Es kann dabei vorteilhafterweise eine benötigte Folge von Challenge-Werten erzeugt werden, wobei jeder Challenge-Wert mehrfach zum Beaufschlagen der physikalisch unklonbaren Funktion verwendet wird.

Das wiederholte Beaufschlagen der Challenge-Response physikalisch unklonbaren Funktion mit einem Challenge-Wert der Challenge-Wert-Folge kann dabei auf unterschiedliche Arten erfolgen: es kann ein Response-Wert direkt hintereinander bestimmt werden oder es kann die Folge mehrfach durchlaufen werden. Die Folge kann vorwärts oder rückwärts durchlaufen werden oder es können mehrere unterschiedlich gereihte Folgen erzeugt werden. Ferner kann die Folge von Challenge-Werten zufällig bestimmt werden.

Die Erfindung betrifft ferner eine Vorrichtung mit einer Schaltkreiseinheit, die Schaltkreiseinheit aufweisend mindestens eine physikalisch unklonbare Funktion, zum Ableiten mindestens eines gerätespezifischen Wertes, die Vorrichtung umfassend:

- einen Challenge-Erzeuger zum Erzeugen von mindestens einer Challenge;

- die Schaltkreiseinheit zum Erzeugen einer Response beim Beaufschlagen der physikalisch unklonbaren Funktion mit der Challenge;

- einen Response-Kategorisierer zum Ableiten einer Kategorisierungsinformation aus einer statistischen Eigenschaft der mindestens zwei Responses; und

- eine Ableitungseinheit zum Ableiten des gerätespezifischen Wertes aus einer Eigenschaft der Kategorisierungsinformation.

Gemäß einer Weiterbildung umfasst die Vorrichtung ferner

- einen Schlüsselbilder zum Erzeugen eines kryptographischen Schlüssels aus einer Folge gerätespezifischer Werte;

- einen Schlüsselspeicher zum Speichern des kryptographischen Schlüssels.

Die Erfindung wird nachfolgend anhand von Ausführungsbeispielen mit Hilfe der Figuren näher erläutert.
Es zeigen:

Figur 1 eine schematische Darstellung einer Vorrichtung sowie eines Verfahrens zum Ableiten eines gerätespezifischen Wertes gemäß einem ersten Ausführungsbeispiel der Erfindung;

Figur 2 eine schematische Darstellung von Bestandteilen einer Vorrichtung sowie einem Abschnitt eines Verfahrens zum Speichern eines kryptographischen Schlüssels gemäß einem zweiten Ausführungsbeispiel der Erfindung.

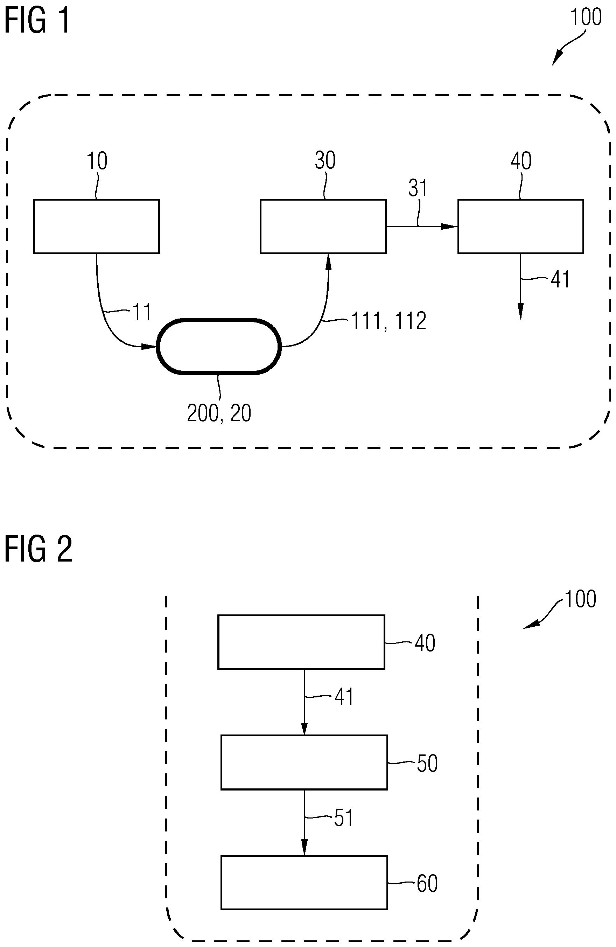

Figur 1 zeigt schematisch eine Vorrichtung 100 mit darauf befindlicher Schaltkreiseinheit 200. Die Schaltkreiseinheit 200 kann dabei ein Bestandteil der Vorrichtung 100 sein. Die Vorrichtung 100 kann insbesondere mehrere Schaltkreiseinheiten aufweisen. Insbesondere handelt es sich bei der Vorrichtung 100 um ein eingebettetes System oder Embedded System. Auf der Schaltkreiseinheit 200 ist eine physikalisch unklonbare Funktion 20, im Folgenden kurz PUF genannt, implementiert. Es handelt sich dabei um eine Challenge-Response-PUF, welche eine Antwort oder Response auf eine Anfrage oder einen Aufforderungswert liefert. Bei der Challenge-Response-PUF kann es sich beispielsweise um eine Ringoszillator-PUF, eine Bistable-Ring-PUF, eine Delay-PUF, eine Arbiter-PUF oder eine Butterfly-PUF handeln.

Die Challenge weist beispielsweise einen Wertbereich von 8 Bit auf und wird von einem Challenge-Generator 10 erzeugt. Dabei ist der Challenge-Generator in der Lage, eine identische Challenge mehrfach zu erzeugen sowie eine Folge von Challenges zu erzeugen. Beispielsweise ist jedes Bitmuster der achtbittigen Challenge generierbar, das heißt die 256 Werte von 00000000 bis 11111111. Jede Challenge der Challenge-Folge ist mehrfach erzeugbar. Der Response-Wert, welcher bei Abfrage der PUF mit der Challenge erzeugt wird, ist 32 Bit groß. Es werden beispielweise acht Responses ermittelt und in einer Tabelle zu der zugehörigen Challenge abgelegt.

Für jeden Challenge-Wert wird durch den Responsekategorisierer 30, der Bestandteil der Vorrichtung 100 ist, eine gemittelte Differenz der Hamming-Gewichte der ermittelten Responses berechnet. Dies geschieht beispielsweise gemäß folgender Formel:

$$\mathrm{MDHW} = \frac{1}{7} * \sum_{i=1\ldots7} \mathrm{HW}(R_0 \mathrm{XOR}\, R_i)$$

R0 steht dabei für die erste ermittelte Response und dient als Referenzwert. Für jede weitere folgende Response R1 bis R7 wird das Hamming-Gewicht HW bezüglich des Referenzwertes R0 ermittelt und aufsummiert. Dies wird durch sieben dividiert aufgrund der sieben Summanden.

Alternativ kann auch paarweise für alle unterschiedlichen Responses Ri, Rj das Hamming-Gewicht der Differenz bestimmt und aufsummiert werden. Dies kann gemäß der folgenden Formel ausgeführt werden:

$$\mathrm{MDHW} = \frac{1}{28} * \sum_{i=0\ldots6} \sum_{j=(i+1)\ldots7} \mathrm{HW}\,(R_i\,\mathrm{XOR}\, R_j)$$

Die Hamming-Gewichte der jeweiligen Kombinationen aus Responses Ri, Rj werden mit unterschiedlichen Indizes aufaddiert, um alle Kombinationen zu erfassen. Da es n*(n-1)/2 Kombinationen, hier also 28 unterschiedliche Kombinationen gibt, wird durch 28 dividiert.

Die gemittelte Differenz der Hamming-Gewichte bildet eine Kategorisierungsinformation 31. Die Kategorisierungsinformation 31 wird mit Hilfe einer Ableitungseinheit 40 mit einem Schwellenwert verglichen. Bei einer 32 Bit-Response können maximal 32 Bit unterschiedlich sein. Im vorliegenden Ausführungsbeispiel werden Challenge-Werte als stabil kategorisiert, wenn die zugeordnete gemittelte Differenz der Hamming-Gewichte kleiner als der Schwellenwert ist. Als Schwellenwert wird beispielsweise der Wert 8 festgesetzt. Eine Kategorisierung als stabil, das heißt eine Kategorisierungsinformation 31, welche kleiner als der Schwellenwert 8 ist, ergibt als gerätespezifischen Wert 41 ein Schlüsselbit vom Wert 0. Andernfalls wird durch die Ableitungseinheit 40 als gerätespezifischer Wert 41 ein Schlüsselbit vom Wert 1 bestimmt.

Analog zu dem Vorgehen für die erste Challenge aus der Challenge-Folge wird auch für alle weiteren Challenges der Challenge-Folge der jeweilige gerätespezifische Wert erzeugt.

Figur 2 zeigt weitere Merkmale einer Vorrichtung 100, welche geeignet ist, gemäß einem zweiten Ausführungsbeispiel der Erfindung einen kryptographischen Schlüssel 51 zu speichern. Neben einer Ableitungseinheit 40 zum Ableiten eines gerätespezifischen Wertes 41, welcher als Schlüsselbit ausgebildet ist, weist die Vorrichtung ferner einen Schlüsselbilder 50 zum Erzeugen eines kryptographischen Schlüssels 51 auf. Der Schlüsselbilder 50 erzeugt für eine Folge gerätespezifischer Werte, welche aus einer Folge von Challenges erzeugt wurde, den kryptographischen Schlüssel 51, welcher in kryptographischen Verfahren eingesetzt wird. Dieser kryptographische Schlüssel 51 wird in einem Schlüsselspeicher 60 der Vorrichtung gespeichert. Insbesondere für die Bereitstellung eines kryptographischen Schlüssels 51 auf einem eingebetteten Gerät werden somit ein sicheres Verfahren und eine sichere Vorrichtung geschaffen, die gleichzeitig mit geringem Hardware-Aufwand realisierbar sind. Der kryptographische Schlüssel 51 wird dabei mittels einer PUF erstellt, welche trotz eines instabilen Verhaltens bei der Response-Erzeugung ohne Hilfsdatensätze oder sogenannte Helperdata auskommt und geeignet ist zur zuverlässigen Schlüsselbildung auf der Schaltkreiseinheit. Somit ist keine aufwendige Initialisierungsphase, in welcher die Hilfsdatensätze erzeugt werden, nötig.

Der Schlüsselbilder 50 führt eine Konkatenation der je Challenge erzeugten gerätespezifischen Werte, die die einzelnen Schlüsselbits bilden, durch. So ist beispielsweise ein kryptographischer Schlüssel 51 der Länge 256 Bit erzeugbar.

Bei dem Schlüsselspeicher 60 kann es sich um einen volatilen Speicher handeln, der ohne Stromversorgung den Speicherinhalt verliert. Beispielsweise handelt es sich um ein Register aus D-Flip-Flops oder um einen SRAM-Speicher.

Je nach erforderlicher Entropie je Schlüsselbit können Nachbearbeitungsverfahren sinnvoll sein, welche zusätzlich zur Erstellung des kryptographischen Schlüssels 51 verwendet werden.

Die beschriebenen Einheiten der Vorrichtung 100 können je nach Anwendung gemeinsam auf der Schaltkreiseinheit 200 realisiert sein.

Challengeerzeuger, Responsekategorisierer, Ableitungseinheit, Schlüsselbilder und Schlüsselspeicher können hardwaretechnisch und/oder auch softwaretechnisch implementiert sein. Bei einer hardwaretechnischen Implementierung kann die jeweilige Einheit als Vorrichtung oder als Teil der Vorrichtung 100, zum Beispiel als Computer oder als Mikroprozessor ausgebildet sein. Es kann sich insbesondere bei der Vorrichtung 100 um ein Embedded System handeln. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

**Patentansprüche**

1. Verfahren zum Ableiten eines gerätespezifischen Wertes (41) aus einer auf einer Schaltkreiseinheit (200) realisierten physikalisch unklonbaren Funktion (20), wobei

   - die physikalisch unklonbare Funktion (20) mindestens zweimal mit einer identischen Challenge (11) beaufschlagt wird zum Erzeugen mindestens zweier Responses (111, 112);

   das Verfahren wird durch folgende Schritte charakterisiert:

   - eine zu der Challenge (11) gehörige Kategorisierungsinformation (31) aus einer statistischen Eigenschaft der mindestens zwei Responses (111, 112) abgeleitet wird, wobei aus der Kategorisierungsinformation (31) eine Zugehörigkeit zu einer von mindestens zwei, durch mindestens einen Schwellenwert festlegbaren Kategorien abgeleitet wird; und;
   - aus der Kategorisierungsinformation (31) der gerätespezifische Wert (41) erzeugt wird, wobei aus der Zugehörigkeit zu der Kategorie der gerätespezifische Wert (41) erzeugt wird.

2. Verfahren nach Anspruch 1, wobei aus einer Folge von Responses als Kategorisierungsinformation (31) eine Bitfehlercharakteristik ermittelt wird.

3. Verfahren nach Anspruch 1 oder 2, wobei durch den gerätespezifischen Wert (41) die Zugehörigkeit zu einer von zwei Kategorien als Binärwert angegeben wird.

4. Verfahren nach einem der vorstehenden Ansprüche, wobei die Kategorisierungsinformation (31) durch einen Vergleich mindestens einer Response mit einer Referenz-Response ermittelt wird und daraus der gerätespezifische Wert (41) erzeugt wird.

5. Verfahren nach einem der vorstehenden Ansprüche, wobei der gerätespezifische Wert (41) als Integritätskenner eines Gerätes verwendet wird.

**6.** Verfahren nach einem der vorstehenden Ansprüche, wobei aus dem gerätespezifischen Wert (41) ein Schlüsselbit eines kryptographischen Schlüssels (51) gebildet wird.

**7.** Verfahren zum Ableiten einer Folge gerätespezifischer Werte, wobei das Verfahren nach einem der Ansprüche 1 bis 6 mit jeweiligen weiteren Challenges ausgeführt wird und aus den jeweiligen gerätespezifischen Werten die Folge erzeugt wird.

**8.** Verfahren nach Anspruch 7, wobei aus der Folge ein kryptographischer Schlüssel (51) gebildet wird.

**9.** Vorrichtung (100) mit einer Schaltkreiseinheit (200), die Schaltkreiseinheit (200) aufweisend mindestens eine physikalisch unklonbare Funktion (20), zum Ableiten mindestens eines gerätespezifischen Wertes (41), die Vorrichtung (100) umfassend:

  - einen Challengeerzeuger (10) zum Erzeugen von mindestens einer Challenge (11);
  - die Schaltkreiseinheit (200) zum Erzeugen mindestens zweier Responses (111, 112) bei einem mindestens zweimaligen Beaufschlagen der physikalisch unklonbaren Funktion (20) mit der identischen Challenge (11);
  - einen Responsekategorisierer (30) zum Ableiten einer Kategorisierungsinformation (31) aus einer statistischen Eigenschaft der mindestens zwei Responses (111, 112), wobei aus der Kategorisierungsinformation (31) eine Zugehörigkeit zu einer von mindestens zwei, durch mindestens einen Schwellenwert festlegbaren Kategorien abgeleitet wird; und
  - eine Ableitungseinheit (40) zum Ableiten des gerätespezifischen Wertes (41) aus der Kategorisierungsinformation (31), wobei aus der Zugehörigkeit zu der Kategorie der gerätespezifische Wert (41) erzeugt wird.

**10.** Vorrichtung nach Anspruch 9, ferner umfassend:

  - einen Schlüsselbilder (50) zum Erzeugen eines kryptographischen Schlüssels (51) aus einer nach Anspruch 7 erzeugten Folge gerätespezifischer Werte;
  - einen Schlüsselspeicher (60) zum Speichern des kryptographischen Schlüssels (51).

**Claims**

**1.** Method for deriving a device-specific value (41) from a physical unclonable function (20) realized on a circuit unit (200), wherein

  - the physical unclonable function (20) has an identical challenge (11) applied to it at least twice in order to produce at least two responses (111, 112);

the method is **characterized by** the following steps:

  - a categorization information item (31) associated with the challenge (11) is derived from a statistical property of the at least two responses (111, 112) wherein an association with one of at least two categories that can be stipulated by at least one threshold value is derived from the categorization information item (31); and
  - the device-specific value (41) is produced from the categorization information item (31), wherein the device-specific value (41) is produced from the association with the category.

**2.** Method according to Claim 1, wherein a bit error characteristic is ascertained from a series of responses as a categorization information item (31).

**3.** Method according to Claim 1 or 2, wherein the device-specific value (41) indicates the association with one of two categories as a binary value.

**4.** Method according to one of the preceding claims, wherein the categorization information item (31) is ascertained by comparing at least one response with a reference response and the device-specific value (41) is produced therefrom.

**5.** Method according to one of the preceding claims, wherein the device-specific value (41) is used as an integrity identifier for a device.

**6.** Method according to one of the preceding claims, wherein a key bit of a cryptographic key (51) is formed from the device-specific value (41).

**7.** Method for deriving a series of device-specific values, wherein the method according to one of Claims 1 to 6 is carried out with respective further challenges and the series is produced from the respective device-specific values.

**8.** Method according to Claim 7, wherein a cryptographic key (51) is formed from the series.

**9.** Apparatus (100) having a circuit unit (200), the circuit unit (200) having at least one physical unclonable function (20), for deriving at least one device-specific value (41), the apparatus (100) comprising:

- a challenge generator (10) for producing at least one challenge (11);
- the circuit unit (200) for producing at least two responses (111, 112) when the physical unclonable function (20) has the identical challenge (11) applied to it at least twice;
- a response categorizer (30) for deriving a categorization information item (31) from a statistical property of the at least two responses (111, 112) wherein an association with one of at least two categories that can be stipulated by at least one threshold value is derived from the categorization information item (31); and
- a derivation unit (40) for deriving the device-specific value (41) from the categorization information item (31), wherein the device-specific value (41) is produced from the association with the category.

**10.** Apparatus according to Claim 9, also comprising:

- a key formation unit (50) for producing a cryptographic key (51) from a series of device-specific values that is produced according to Claim 7;
- a key memory (60) for storing the cryptographic key (51).

**Revendications**

**1.** Procédé de dérivation d'une valeur (41) spécifique à un appareil à partir d'une fonction inclonable physiquement (20), réalisée sur une unité de circuit (200),

- la fonction inclonable physiquement (20) étant soumise à au moins deux reprises à une interrogation identique (11) pour générer au moins deux réponses (111, 112) ;

le procédé étant **caractérisé par** les étapes suivantes :

- une information de catégorisation (31) associée à l'interrogation (11) est dérivée d'une caractéristique statistique des au moins deux réponses (111, 112), une appartenance à l'une d'au moins deux catégories déterminables par au moins une valeur seuil étant dérivée à partir de l'information de catégorisation (31) ; et
- la valeur (41) spécifique à un appareil est générée à partir de l'information de catégorisation (31), la valeur (41) spécifique à un appareil étant générée à partir de l'appartenance à la catégorie.

**2.** Procédé selon la revendication 1, une caractéristique d'erreur binaire étant déterminée à partir d'une séquence de réponses en tant qu'information de catégorisation (31).

**3.** Procédé selon la revendication 1 ou 2, l'appartenance à l'une de deux catégories étant indiquée en tant que valeur binaire par la valeur (41) spécifique à un appareil.

**4.** Procédé selon l'une des revendications précédentes, l'information de catégorisation (31) étant déterminée par une comparaison d'au moins une réponse avec une réponse de référence et la valeur (41) spécifique à un appareil étant générée sur cette base.

**5.** Procédé selon l'une des revendications précédentes, la valeur (41) spécifique à un appareil étant utilisée en tant qu'identifiant d'intégrité d'un appareil.

**6.** Procédé selon l'une des revendications précédentes, un bit clé d'une clé cryptographique (51) étant formé à partir de la valeur (41) spécifique à un appareil.

**7.** Procédé de dérivation d'une séquence de valeurs spécifiques à un appareil, le procédé selon l'une des revendications 1 à 6 étant exécuté avec d'autres interrogations respectives et la séquence étant générée à partir des valeurs respectives spécifiques à un appareil.

**8.** Procédé selon la revendication 7, une clé cryptographique (51) étant formée à partir de la séquence.

**9.** Dispositif (100) comportant une unité de circuit (200), l'unité de circuit (200) comportant au moins une fonction inclonable physiquement (20), pour la dérivation d'au moins une valeur (41) spécifique à un appareil, le dispositif (100) comprenant :

- un générateur d'interrogations (10) pour générer au moins une interrogation (11);
- l'unité de circuit (200) pour générer au moins deux réponses (111, 112), la fonction inclonable physiquement (20) étant soumise à au moins deux reprises à l'interrogation identique (11) ;
- un catégoriseur de réponses (30) pour dériver une information de catégorisation (31) d'une caractéristique statistique des au moins deux réponses (111, 112), une appartenance à l'une d'au moins deux catégories déterminables par au moins une valeur seuil étant dérivée à partir de l'information de catégorisation (31) ; et
- une unité de dérivation (40) pour dériver la valeur (41) spécifique à un appareil de l'information de catégorisation (31), la valeur (41) spécifique à un appareil étant générée à partir de l'appartenance à la catégorie.

**10.** Dispositif selon la revendication 9, comprenant en outre :

- un formateur de clé (50) pour générer une clé cryptographique (51) à partir d'une séquence de valeurs spécifiques à un appareil générée selon la revendication 7 ;
- une mémoire de clés (60) pour stocker la clé cryptographique (51).

FIG 1

100

10

30

31

40

11

200, 20

111, 112

41

FIG 2

100

40

41

50

51

60

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011055649 A1
- US 2010127822 A1
- US 2014093074 A1
- WO 2012045627 A1